# EUROPEAN PATENT SPECIFICATION

(11) **EP 2 522 679 B1**
(45) Date of publication and mention of the grant of the patent: **13.07.2016**
(21) Application number: 10842222.1
(22) Date of filing: 27.12.2010
(51) Int. Cl.: C08F 30/06, C07F 5/02, C08F 220/56

(54) **PHENYLBORONIC ACID MONOMER AND PHENYLBORONIC ACID POLYMER**
PHENYLBORONSÄUREMONOMER UND PHENYLBORONSÄUREPOLYMER
MONOMÈRE ACIDE PHÉNYLBORONIQUE ET POLYMÈRE D'ACIDE PHÉNYLBORONIQUE

(30) Priority: 05.01.2010 JP 2010000821
(43) Date of publication of application: 14.11.2012
(73) Proprietor: National Institute for Materials Science, Tsukuba-shi, Ibaraki 305-0047 (JP)
(72) Inventor: MATSUMOTO, Akira, Tokyo 113-8654 (JP); ISHII, Takehiko, Tokyo 113-8654 (JP); KATAOKA, Kazunori, Tokyo 113-8654 (JP); MIYAHARA, Yuji, Tsukuba-shi Ibaraki 305-0047 (JP)
(74) Representative: Brooks, Nigel Samuel
(86) International application number: PCT/JP2010/073544
(87) International publication number: WO 2011/083711

(56) References cited:
- JP-A- 11 322 761
- US-A1- 2008 214 912
- DATABASE CA [Online] CHEMICAL ABSTRACTS SERVICE, COLUMBUS, OHIO, US; BURLES, BARRY ET AL: "Ophthalmic device comprising a holographic sensor", XP002695387, retrieved from STN Database accession no. 2009:93592 -& US 2009/021697 A1 (BURLES, BARRY ET AL) 22 January 2009 (2009-01-22)
- DATABASE CA [Online] CHEMICAL ABSTRACTS SERVICE, COLUMBUS, OHIO, US; LOWE, CHRISTOPHER ROBIN ET AL: "Holographic sensor", XP002695388, retrieved from STN Database accession no. 2004:780940 -& WO 2004/081624 A1 (SMART HOLOGRAMS LTD [GB]; UNIV CAMBRIDGE TECH [GB]; LOWE CHRISTOPHER R) 23 September 2004 (2004-09-23)
- DATABASE CA [Online] CHEMICAL ABSTRACTS SERVICE, COLUMBUS, OHIO, US; HUVAL, CHAD CORI ET AL: "Polymeric boronic acid derivatives as lipase inhibitors, (macro)monomer precursors, and treatment of obesity", XP002695389, retrieved from STN Database accession no. 2004:453269 -& WO 2004/046211 A1 (GENZYME CORP [US]; HUVAL CHAD CORI [US]; LI XINHUA [US]; HOLMES-FARLEY) 3 June 2004 (2004-06-03)
- DATABASE CA [Online] CHEMICAL ABSTRACTS SERVICE, COLUMBUS, OHIO, US; SATOH, MASAHIRO ET AL: "Liquid-crystal compounds, and compositions and display devices containing them", XP002695390, retrieved from STN Database accession no. 1993:244729 & EP 0 517 498 A1 (SANYO CHEMICAL INDUSTRIES LTD., JAPAN) 9 December 1992 (1992-12-09)
- DATABASE CA [Online] CHEMICAL ABSTRACTS SERVICE, COLUMBUS, OHIO, US; SATO, MASAHIRO ET AL: "Liquid crystal naphthalene compound and its composition for display", XP002695391, retrieved from STN Database accession no. 1994:335197 & JP 6 025059 A (SANYO CHEMICAL IND LTD, JAPAN) 1 February 1994 (1994-02-01)
- DATABASE CA [Online] CHEMICAL ABSTRACTS SERVICE, COLUMBUS, OHIO, US; SATO, MASAHIRO ET AL: "Liquid crystal naphthalene compound and its composition for display", XP002695392, retrieved from STN Database accession no. 1994:335198 & JP 6 025060 A (SANYO CHEMICAL IND LTD, JAPAN) 1 February 1994 (1994-02-01)
- DATABASE CA [Online] CHEMICAL ABSTRACTS SERVICE, COLUMBUS, OHIO, US; VEDEJS, E. ET AL: "Conversion of Arylboronic Acids into Potassium Aryltrifluoroborates: Convenient Precursors of Arylboron Difluoride Lewis Acids", XP002695393, retrieved from STN Database accession no. 1995:554023 & VEDEJS, E. ET AL: "Conversion of Arylboronic Acids into Potassium Aryltrifluoroborates: Convenient Precursors of Arylboron Difluoride Lewis Acids", JOURNAL OF ORGANIC CHEMISTRY , 60(10), 3020-7 CODEN: JOCEAH; ISSN: 0022-3263, 1995,
- DATABASE CA [Online] CHEMICAL ABSTRACTS SERVICE, COLUMBUS, OHIO, US; LOWE, CHRISTOPHER ROBIN ET AL: "Ophthalmic device comprising a holographic sensor", XP002695394, retrieved from STN Database accession no. 2005:300731 & WO 2005/031442 A1 (SMART HOLOGRAMS LTD., UK; CIBA VISION CORP.; CAMBRIDGE UNIVERSITY TECH) 7 April 2005 (2005-04-07)
- DATABASE CA [Online] CHEMICAL ABSTRACTS SERVICE, COLUMBUS, OHIO, US; KAESE, TORSTEN ET AL: "Syntheses of dialkenes and diepoxides, and the influence of their structural parameters on liquid crystalline properties", XP002695395, retrieved from STN Database accession no. 2005:1006307 & KAESE, TORSTEN ET AL: "Syntheses of dialkenes and diepoxides, and the influence of their structural parameters on liquid crystalline properties", LIQUID CRYSTALS , 32(7), 921-931 CODEN: LICRE6; ISSN: 0267-8292, 2005,
- DATABASE CA [Online] CHEMICAL ABSTRACTS SERVICE, COLUMBUS, OHIO, US; LIETZAU, LARS ET AL: "Pyran/dioxan derivatives and use thereof in liquid crystal media", XP002695396, retrieved from STN Database accession no. 2006:1251777 & WO 2006/125511 A1 (MERCK PATENT G.M.B.H., GERMANY) 30 November 2006 (2006-11-30)
- DATABASE REAXYS [Online] Elsevier; 2006, Huval et al: "Polymeric boronic acid derivatives as lipase inhibitors", XP002695397,accession no. XRN = 11338824, 12900772 Database accession no. XRN = 11338824, 12900772
- WU W ET AL: "Construction of optical glucose nanobiosensor with high sensitivity and selectivity at physiological pH on the basis of organic-inorganic hybrid microgels", BIOSENSORS AND BIOELECTRONICS, ELSEVIER BV, NL, vol. 25, no. 12, 15 August 2010 (2010-08-15), pages 2603-2610, XP027077353, ISSN: 0956-5663, DOI: 10.1016/J.BIOS.2010.04.030 [retrieved on 2010-04-28]
- PROSPER NSHIMYUMUKIZA ET AL: "Synthesis and biological evaluation of novel imidazole-containing macrocycles", TETRAHEDRON, vol. 66, no. 25, 21 April 2010 (2010-04-21), pages 4515-4520, XP055059128, ISSN: 0040-4020, DOI: 10.1016/j.tet.2010.04.070
- DATABASE CA [Online] CHEMICAL ABSTRACTS SERVICE, COLUMBUS, OHIO, US; 1 July 2010 (2010-07-01), LAI, YU-CHIN ET AL: "Biomedical devices containing a polymerizable monomer containing a boronic acid moiety and an electron withdrawing moiety and a biomedical device-forming comonomer for contact lenses or intraocular lenses", XP002695398, retrieved from STN Database accession no. 2010:820744 & US 2010/168356 A1 (LAI, YU-CHIN ET AL) 1 July 2010 (2010-07-01)
- SATYAMOORTHY KABILANA ET AL.: 'Holographic glucose sensors' BIOSENSORS AND BIOELECTRONICS vol. 20, no. 8, 05 February 2005, pages 1602 - 1610, XP027619502
- AKIRA MATSUMOTO ET AL.: 'Glucose-Responsive Polymer Gel Bearing Phenylborate Derivative as a Glucose-Sensing Moiety Operating at the Physiological pH' BIOMACROMOLECULES vol. 5, no. 3, 15 April 2004, pages 1038 - 1045, XP008159372
- JUN YAN ET AL.: 'The relationship among pKa, pH, and binding constants in the interactions between boronic acids and diols-it is not as simple as it appears' TETRAHEDRON vol. 60, no. 49, 29 November 2004, pages 11205 - 11209, XP004617676

## Description

### TECHNICAL FIELD

This invention relates to a phenylboronic acid monomer, and a phenylboronic acid polymer.

### BACKGROUND ART

Since a phenylboronic acid compound (hereinafter referred to as PBA) has a capability of reversible and covalent binding to a saccharide molecule such as glucose, a number of reports have recently been made, at the research level, on attempts to constitute, by utilizing such phenylboronic acid compound, a saccharide sensor and a saccharide-responsive actuator, employing various methods such as colorimetric or photometric method.

As the acidity of a phenylboronic acid, however, is weak in general, and the pKa value quantitatively representing strength of acid is generally eight to nine, it has been considered difficult in principal to use it in the physiological environments of pH 7.4. On the other hand, phenylboronic acid compounds with lower pKa values compared with the conventional ones have been proposed in. e.g., Japanese unexamined patent application publication No. H11-322761 (patent document 1). Here, pKa means the value represented by -log₁₀ Ka, wherein Ka denotes an acid dissociation constant.

### PRIOR ART DOCUMENT

### PATENT DOCUMENT

Patent document 1: Japanese unexamined patent application publication No. H11-322761.
US 2009/021697 discloses an ophthalmic device comprising a holographic sensor with a PBA group for detecting analyte. US 2009/021697 discloses a holographic support medium being formed by copolymerising 13 mol % 5-fluoro-2-methylacrylamidophenylboronic acid (synthesised according to WO04/081624) and 3% MBA in acrylamide.
Satyamoorthy Kabilan, et al., Holographic glucose sensors, Biosensors and Bioerectronics, 2005.02.05, vol.20, no.8, pages 1602-1610 discloses holographic sensor systems capable of detecting dynamic changes in glucose concentration. The hologram is recorded within a bio-compatible hydrogel matrix containing PBA derivatives. The first system involves the use of high concentrations of 3-acrylamidophenylboronic acid (3-APB) whilst the second system utilises 2-acrylamido-5-fluorophenylboronic acid (5-F-2-MAPB).
Akira Matsumoto, et al., Glucose-Responsive Polymer Gel Bearing Phenylborate Derivative as a Glucose-Sensing Moiety Operating at the Physiological pH, Biomacromolecules, 2004, 5 (3), pp 1038-1045 discloses the preparation of a synthetic, glucose-responsive polymer gel bearing a phenylborate derivative as a sensor moiety to glucose, for future use as a self-regulated insulin delivery system.
The molecular strategies to enable the system to be operated under physiological conditions (pH 7.4, 37 °C) are presented that involve the use of a novel phenylborate derivative {4-(1,6-dioxo-2,5-diaza-7-oxamyl) phenylboronic acid: DDOPBA} possessing an appreciably low pKa (∼7.8), the adoption of poly(N-isopropylmethacrylamide) (PNIPMAAm) for the main chain.

### SUMMARY OF THE INVENTION

### PROBLEMS TO BE SOLVED BY THE INVENTION

According to the above patent document 1, whilst the pKa values are allowed to have the ones close to those in the physiological environments, there have been problems that it has such an extremely limited application that a polymer suitable for a variety of intended purposes is difficult to obtain.

Accordingly, the present invention has been made in view of the above-mentioned, and is aimed at proposing a phenylboronic acid monomer and a phenylboronic acid polymer which are capable of possessing a pKa value suitable for the use in the physiological environments and can be used for a variety of intended purposes.

### MEANS FOR SOLVING THE PROBLEM

According to the present invention there is provided:
A phenylboronic acid monomer represented by the following formula 20:

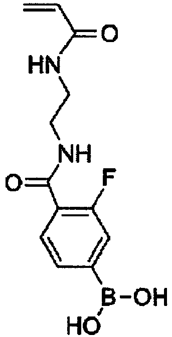

According to the present invention there is also provided a phenylboronic acid polymer, wherein at least one compound selected from a group consisting of N-isopropylacrylamide, N-(hydroxymethyl)acrylamide and N-isopropylmethacrylamide is polymerized with the phenylboronic acid monomer according to formula 20.

Preferably, a phenylboronic acid polymer is obtained by polymerization of the phenylboronic acid monomer according to formula 20 with N-isopropylmethacrylamide in arbitrary proportion.

Also disclosed herein is a monomer represented by the following formula 5: 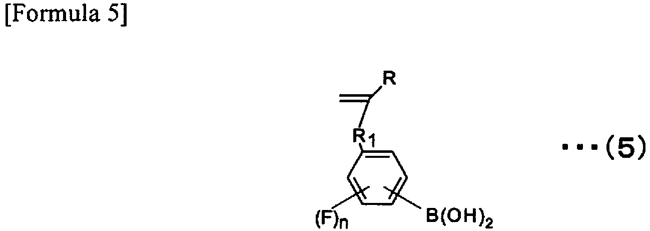 (wherein R is H or CH₃, F is independently present, n is any one of 1, 2, 3 or 4, and R₁ represents a divalent linking group), thus exhibiting a characteristic feature of the present invention.

Further, also disclosed herein the one in which the formula (5) is specifically represented by the following formula (6): 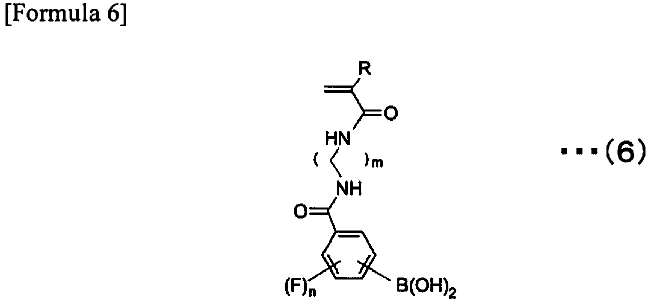 (wherein m is 0, or an integer of one or more), thus exhibiting a characteristic feature of the present invention.

Additionally disclosed is formula (6) wherein the integer m is one or more.

Also disclosed is a polymer represented by the following formula (7): 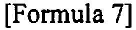 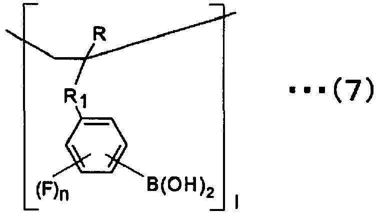 (wherein R is H or CH₃, F is independently present, n is any one of 1, 2, 3 or 4, 1 is an integer of two or more, and R₁ represents a divalent linking group), thus exhibiting a characteristic feature of the present invention.

Further disclosed is the one in which the formula (7) is represented by the following formula (8): 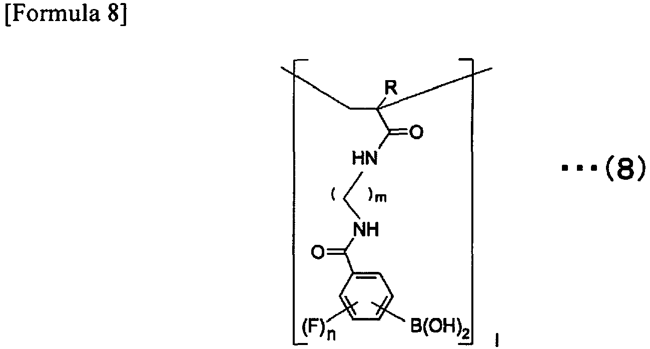 (wherein m is 0 or an integer of one or more), thus exhibiting a characteristic feature of the present invention.

Furthermore, at least one compound selected from a group consisting of N-isopropylacrylamide, N-(hydroxymethyl)acrylamide and N-isopropylmethacrylamide maybe polymerized with the phenylboronic acid monomer described in formulae 5, 6 or 6 wherein the integer m is one or more

Moreover, the polymer maybe obtained by polymerization of the phenylboronic acid monomer described in any one of the compounds described above with N-isopropylmethacrylamide in arbitrary proportion.

### EFFECT OF THE INVENTION

According to the present invention, there can be obtained a phenylboronic acid monomer, possessing a high hydrophilicity at the physiological pH value of pH 7.4 or less, being polymerizable with a variety of monomers, and suitable for the intended purposes.

In addition, according to the present invention, there can be obtained a phenylboronic acid polymer polymerized with the monomer possessing a high hydrophilicity at the physiological pH value of pH 7.4 or less and suitable for the intended purposes.

### BRIEF DESCRIPTION OF THE DRAWINGS

Fig.1 is a diagram showing a synthetic scheme of a phenylboronic acid monomer of the present invention.
Fig.2 is a graph showing a relationship between apparent pKas and concentrations of glucose.
Fig.3 is a graph showing changes in diameter of gel samples and comparative samples at predetermined temperatures.
Fig.4 is a graph showing changes in diameter of the gel samples at predetermined temperatures.
Fig.5 is a graph showing relationship between swelling degrees and temperatures, accompanied by photographs of the gel samples at various glucose concentrations at the temperature of 37°C (degrees of Celsius).
Fig.6 is a graph showing the changes in diameter of the comparative samples at the predetermined temperatures.

### EMBODIMENTS OF THE INVENTION

Embodiments of the invention are described hereunder in detail with reference to the drawings.

A phenylboronic acid monomer is represented by the following formula (9): 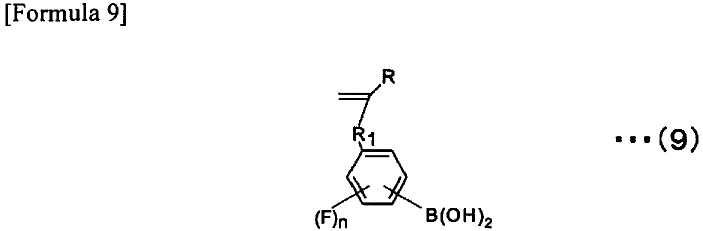 (wherein R is H or CH₃, F is independently present, n is any one of 1, 2, 3 or 4, and R₁ represents a divalent linking group.)

The divalent linking group represented by R₁ comprises one or more bonds selected from a group consisting of carbamoyl bond, amide bond, alkyl bond, ether bond, ester bond, thioester bond, thioether bond, sulfonamide bond, urethane bond, sulfonyl bond, imine bond, urea bond, thiourea bond and the like.

As mentioned above, the phenylboronic acid monomer has a structure wherein one or more fluorines are substituted for hydrogen on the phenyl ring of phenylboronic acid group and a carbon of vinyl group is bound to the phenyl ring via the linking group R₁.

The phenylboronic acid monomer has a high hydrophilicity, and its pKa can be controlled to the values of pH 7.4 or less in the physiological level by fluorination of the phenyl ring. Further, this phenylboronic acid monomer can acquire an ability not only to recognize a saccharide in the physiological environments, but also to copolymerize with a variety of monomers due to having the structure comprising a vinyl group, and as a result, polymers suitable for a variety of intended purposes can be obtained.

As an example, in the phenylboronic acid monomer represented by the above formula (9), if n is 1 and one fluorine on the phenyl ring is substituted for hydrogen, the positions of F and B(OH)₂ to be disposed may be any one of ortho, metha, or para.

Under this condition, if carbamoyl group is applied as the linking group R₁, the above formula (9) is represented by the following formula (10): 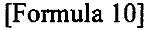 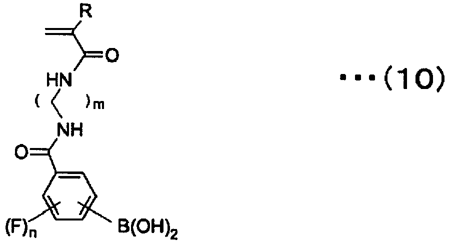 wherein m is 0, or an integer of one or more.

As mentioned above, the phenylboronic acid monomer has the structure comprising a fluorophenyl boronic acid group wherein one or more of fluorines are substituted for hydrogen on the phenyl ring and the carbon of amide group is bound to the phenyl ring.

In addition, if m is 0, the phenylboronic acid monomer has an acrylamide or methacrylamide structure wherein nitrogen of an amide group directly binds to nitrogen of other amide group so as to be comprised of the other amide group therein. While, if m is one or more, the phenylboronic acid monomer has an acrylamide or methacrylamide structure wherein nitrogen of an amide group binds to nitrogen of other amide group via one or more carbons so as to be comprised of the other amide group therein. Note that, if m is one or more, the pKa of the phenylboronic acid monomer can be controlled to a lower value compared with the value under the condition that m is 0, and that even such phenylboronic acid monomer shows the similar effect to the phenylboronic acid monomer represented by the above formula (9).

Here, a phenylboronic acid polymer obtained by polymerization of the phenylboronic acid monomers represented by the above formula (9) is represented by the following formula (11): 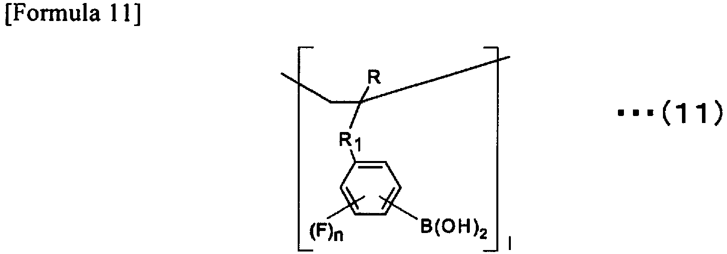 (wherein R is H or CH₃, F is independently present, n is any one of 1, 2, 3, or 4,1 is an integer of two or more, and R₁ represents a divalent linking group.)

In addition, as an example of divalent linking group, if a linking group comprising carbamoyl bond is applied, the above formula (11) represents the following formula (12) (wherein m is 0 or an integer of one or more.)

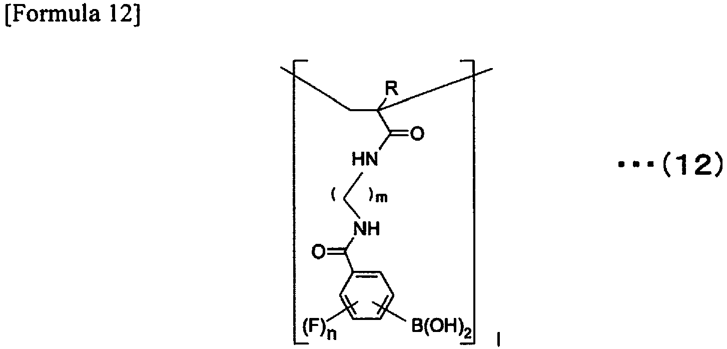

Further, monomers which can polymerize with the monomers represented by the above formulas (9) and (10) include N-isopropylacrylamide, N-(hydroxymethyl)acrylamide, N-isopropylmethacrylamide and the like.

As an example of the above formula (10) is shown a phenylboronic acid monomer wherein n is 1, fluorine is substituted for one hydrogen on the phenyl ring of phenylboronic acid group, m is 2 and the spacer carbons are two, as represented by the following formula (13) (wherein R is H or CH₃)

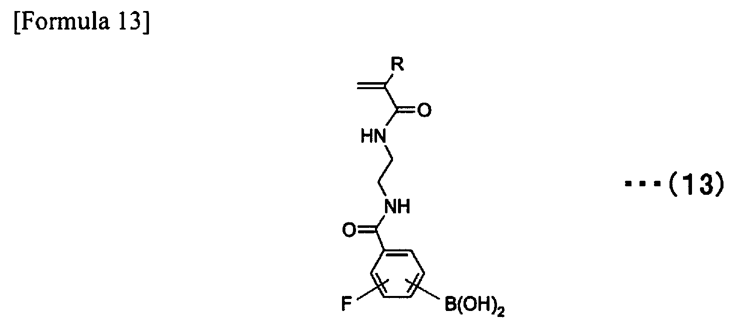

A phenylboronic acid copolymer represented by the following formula (14) can be obtained by copolymerization among the phenylboronic acid monomers represented by the above formula (13) (wherein R is H or CH₃, and 1 is an integer of two or more)

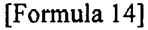

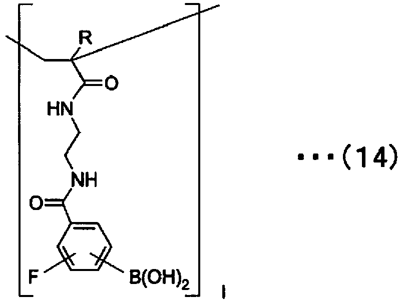

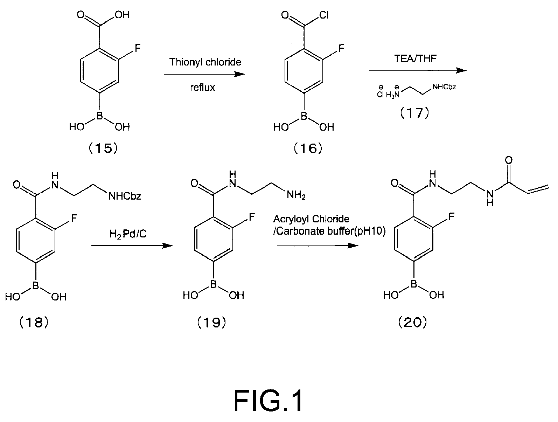

Here, the phenylboronic acid monomer represented by the above formula (13) can be produced by the synthetic scheme as shown in Fig. 1. At first, carboxy-fluorophenylboronic acid represented by the formula (15) shown in Fig.1 is reacted by reflux after addition of thionyl chloride, then acid chloride compound represented by the formula (16) is synthesized.

Next, the acid chloride compound represented by the above formula (16) is dissolved in tetrahydrofuran (THF), triethylamine (TEA) is added as a base catalyst, and reacted by addition of the compound represented by the following formula (17), and thus an intermediate compound represented by the formula (18) (Fig. 1) is synthesized.

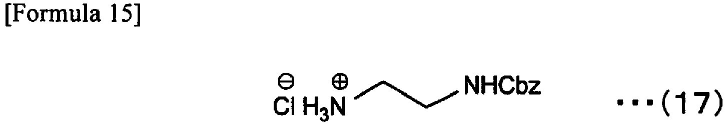

Subsequently, in the presence of hydrogen gas, an intermediate compound represented by the formula (19) (Fig. 1) is synthetized by reduction of the intermediate compound represented by the formula (18) with palladium/carbon (Pd/C) catalyst. Then, by Schotten-Baumann method, the phenylboronic acid monomer of the invention represented by the formula (20) (Fig. 1) can be synthetized by mixing the intermediate compound represented by the formula (19) with acryloyl chloride.

In the above configurations, as represented by the formula (9), the phenylboronic acid monomer has the structure comprising fluorophenyl boronic acid group containing one or more of fluorines substituted for hydrogen on the phenyl ring of phenylboronic acid group, and the unsaturated bond.

Accordingly, the phenylboronic acid monomer is allowed to possess pKa that can be controlled to physiological level of 7.4 or less due to fluorinated phenyl ring and can cause polymerization with a variety of monomers due to its high hydrophillicity and the structure comprising a vinyl group, thus enabling the polymers suitable for the intended purposes to be obtained.

In the meantime, as conventional polymerizable derivatives of phenylboronic acid having the unsaturated bond, there are known methacrylamide phenylboronic acid (Japanese unexamined patent application publication No. H3-204823), 3-acrylamide-6-hexafluoropropylphenyl boronic acid (Japanese unexamined patent application publication No. H5-301880), N-(4'-vinylbenzyl)-4-phenylboronic acid carboxamide (Japanese unexamined patent application publication No. H5-262779), and 4-(1', 6'-dioxo-2',5'-diaza-7'-octenyl)phenyl boronic acid (Japanese unexamined patent application publication No. H11-322761) and the like.

These conventional derivatives of phenylboronic acid, however, do not satisfy, at the same time, all of the following three properties: (1) a high water-solubility; (2) an appreciably lower pKa than conventional ones; and (3) having a polymerizable unsaturated bond. According to the conventional derivatives of phenylboronic acid, therefore, when polymerized in an aqueous solvent, they cannot bear sufficient amount of phenylboronic acids therein, or the polymerized polymers and the hydrous gel have such a high hydrophobicity that the polymer cannot fulfill its full function as a saccharide-responsive gel capitalizing on the Lower Critical Solution Temperature (LCST).

In contrast, according to the phenylboronic acid monomer of the invention, it is allowed to have a high hydrophilicity, an appreciably low pKa, and also an ability to possess a polymerizable unsaturated bond to enable the monomer to fulfill all of the three properties described above at the same time, due to its structure being represented by the above formula (9). Accordingly, the phenylboronic acid monomer indicates a high hydrophilicity in the physiological level of pKa 7.4 or less, and a sufficient amount of phenylboronic acids can be comprised in the polymer. Additionally, the phenylboronic acid monomer can work sufficiently as the saccharide-responsive gel revealing a saccharide-dependent change in the Lower Critical Solution Temperature (LCST).

### EXAMPLES

### (1) EXAMPLE

Next, 4-(2-acrylamide ethylcarbamoyl)-3-fulorophenylboronic acid (hereinafter referred to as sample 1) was synthetized as an example of the phenylboronic acid monomer of the invention according to the synthetic scheme 1 shown in Fig. 1. In practice, the sample 1 of this example was synthesized by the following procedures.

At first, to 27 mmol of carboxyfluorophenylboronic acid (formula (15)) was added 50 mL of thionyl chloride, and refluxed at 90°C (degrees of Celsius) in an oil bath, then the solution was produced. Subsequently, the redundant thionyl chloride was removed from the reaction mixture, and dissolved in 90 mL of tetrahydrofuran (THF), then added with 40 mmol of the compound represented by the above formula (17). Triethylamine (TEA) 200 mmol was added thereto in an ice-water bath, then the mixture was stirred at room temperature for one day.

To the solution thus produced was added a diluted hydrochloric acid solution saturated with sodium chloride salt, and the procedures for washing and separation of solution were repeated, then THF was removed. The residue was dissolved in 400 mL of ethanol, and added with 1 g of 10% palladium carbon catalyst, and was subjected to hydrogen reduction reaction carried out at 40°C (degrees of Celsius). Then, the palladium carbon catalyst was filtered, and the intermediate compound represented by the formula (19) (in Fig. 1) was obtained from the filtered solution. Then, the obtained intermediate compound was added with 50 mmol of acryloyl chloride and 150 mL of buffer solution of a carbonate salt (100 mM, pH 10), and stirred, and thus sample 1 of the example was obtained.

### (2) FIRST COMPARATIVE EXAMPLE

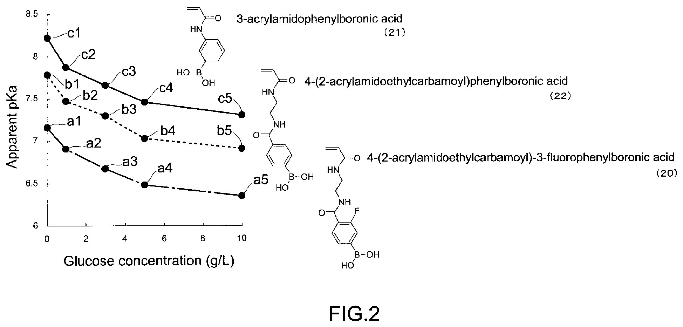

Next, as a first comparative example, there was prepared 3-acrylamidephenyl boronic acid (Wako Pure Chemical Industries, Ltd., hereinafter referred to as comparative sample 1) represented by the formula (21) in Fig.2.

### (3) SECOND COMPARATIVE EXAMPLE

Subsequently, as a second comparative example, 4-(2-acrylamideethylcarbamoyl)phenyl boronic acid (hereinafter referred to as comparative sample 2) represented by the formula (22) in Fig. 2 was prepared. The comparative sample 2 was prepared according to the identical manner of the procedures to those for the sample 1, using carboxyphenyl boronic acid as a starting raw material in place of carboxyfluorophenyl boronic acid used in the sample 1.

### (4) Measurement of pKa

Subsequently, for the sample 1, the comparative sample 1 and the comparative sample 2, the relationships between glucose concentrations and apparent changes in pKa were derived by acid-base titration under various glucose concentration conditions (0 g/L, 1 g/L, 3 g/L, 5 g/L, and 10 g/L).

The results were shown in Fig. 2. It was observed that the samples a1 to a5 that used sample 1 of the phenylboronic acid monomer of the invention showed lower values of pKa than 7.4 of the physiological level in all glucose concentrations, and that the degrees of decrease in pKa according to the increase in the concentrations of glucose was excellent compared with the samples b1 to b5 and the samples c1 to c5 that used the conventional comparative samples 1 and 2.

### (5) Relationship between changes in diameter of gel samples and temperatures

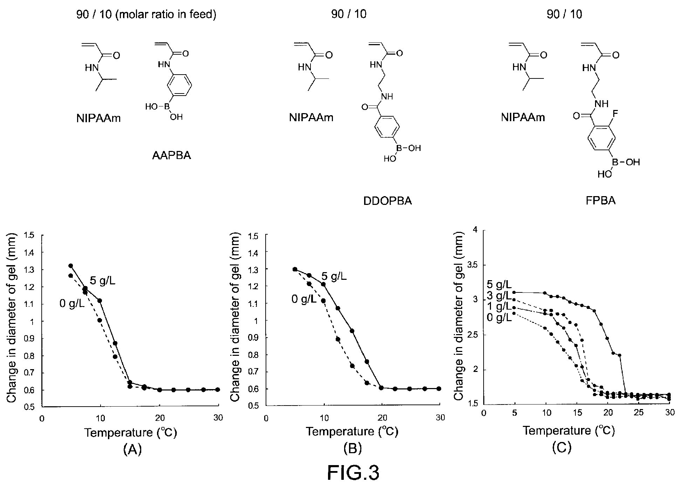

Next, as shown in Fig. 3(A), a gel sample (hereinafter referred to as comparative gel sample 1) was prepared by copolymerizing N-isopropylacrylamide (NIPAAm) and the comparative sample 1 (AAPBA) as the first comparative example in a molar ratio of 90/10. Then, the comparative gel sample 1 in a cylindrical shape having a diameter of 1 mm in a shrunk condition was put into each of aqueous glucose solutions prepared at the concentrations of 0 g/L and 5 g/L, respectively, and then the change in diameter of the comparative gel sample 1 was measured at each predetermined temperature from 5 to 30°C (degrees of Celsius).

As a result, there could be obtained the results as shown in Fig. 3(A). In Fig. 3(A), the vertical axis shows the changes in diameter of the comparative gel sample 1 as "Changes in diameter of gel", and the horizontal axis shows the temperature. As shown in Fig. 3(A), it was observed that in the comparative gel sample 1, the changes in diameter caused by varying the glucose concentration were small in a range of 5 to 30°C (degrees of Celsius).

Next, as shown in Fig. 3(B), N-isopropylacrylamide (NIPAAm) and the comparative sample 2 as the second comparative example (referred to as DDOPBA in Fig. 3(B)) were copolymerized in a molar ratio of 90/10, then the gel sample (hereinafter referred to as gel sample 2) was produced. The comparative gel sample 2 in a cylindrical shape having a diameter of 1 mm in a shrunk condition was put into each of aqueous glucose solutions prepared at the concentrations of 0 g/L and 5 g/L, then the change in diameter of the comparative gel sample 2 was measured at each predetermined temperature from 5 to 30°C (degrees of Celsius).

As a result, there could be obtained the results as shown in Fig. 3(B). In Fig. 3(B), the vertical axis shows the changes in diameter of the comparative gel sample 2 as "Changes in diameter of gel", and the horizontal axis shows the temperature. As shown in Fig. 3(B), as regards the comparative gel sample 2 as well, it was observed that the changes in diameter caused by varying the glucose concentration were small in a range of 5 to 30°C (degrees of Celsius).

Next, as shown in Fig. 3(C), N-isopropylacrylamide (NIPAAm) and the sample 1 as the example of the phenylboronic acid monomer of the invention (FPBA) were copolymerized in a molar ratio of 90/10, then the gel sample (hereinafter referred to as gel sample 1) was produced. The gel sample 1 in a cylindrical shape having a diameter of 1 mm in a shrunk condition was put into each of aqueous glucose solutions prepared at the concentrations of 0 g/L, 1 g/L, 3 g/L and 5 g/L, the change in diameter of the gel sample 1 was measured at each predetermined temperature in a range of 5 to 30°C (degrees of Celsius).

As a result, there could be obtained the results as shown in Fig. 3(C). In Fig. 3(C), the vertical axis shows the changes in diameter of the gel sample 1 as "Changes in diameter of gel", and the horizontal axis shows the temperature. As shown in Fig. 3(C), as regards the gel sample 1, it was observed that the changes in diameter caused by varying the glucose concentration were extremely large in a range of 5 to 30°C (degrees of Celsius)]compared with the foregoing comparative gel sample 1 and the comparative gel sample 2. Accordingly, it was observed that the phenylboronic acid monomer of the invention is excellent in capability of recognition for saccharide, and works efficiently as a saccharide-responsive gel.

### (6) Effect of change in molar ratio on relationship between change in diameter of gel sample and temperature

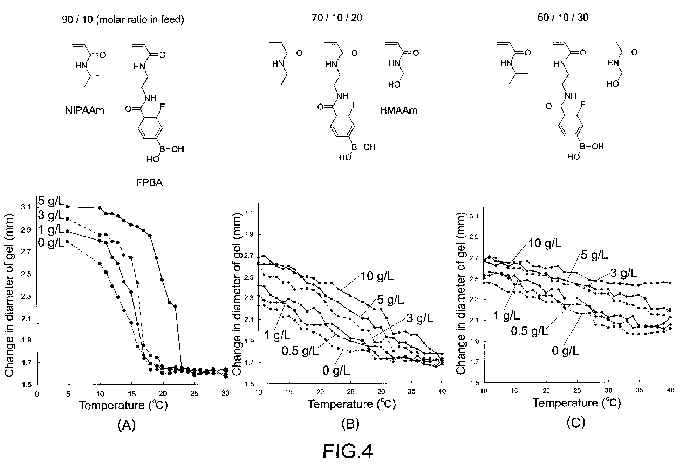

Subsequently, the effect of changes in molar ratio of other monomers contained in the gel sample 1 on changes in diameter of gel sample 1 according to varying temperatures was examined. Fig. 4(A) is a graph showing, in an expanded scale of vertical axis, changes in diameter of Fig. 3(C) representing the above-mentioned "(5) Relationship between changes in diameter of gel samples and temperatures."

As for another case, as shown in Fig. 4(B), N-isopropylacrylamide (NIPAAm), the sample 1 or the phenylborate monomer of the example of the invention (FPBA), and N-(hydroxymethyl)acrylamide (HMAAm) were copolymerized in a molar ratio of 70/10/20, then the gel sample (hereinafter referred to as gel sample 2) was produced. The gel sample 2 in a cylindrical shape having a diameter of 1 mm in a shrunk condition was put into each of aqueous glucose solutions prepared at the concentrations of 0 g/L, 0.5 g/L, 1 g/L, 3 g/L, 5 g/L and 10 g/L, then the change in diameter of the gel sample 2 was measured at each predetermined temperature in a range of 10 to 40°C (degrees of Celsius). As a result, there could be obtained the results as shown in Fig. 4(B).

Also, as shown in Fig. 4(C), N-isopropylacrylamide (NIPAAm), the sample 1 or the phenylborate monomer of the example of the invention (FPBA), and N-(hydroxymethyl)acrylamide (HMAAm) were copolymerized in a molar ratio of 60/10/30, then the gel sample (hereinafter referred to as gel sample 3) was produced. The gel sample 3 in a cylindrical shape having a diameter of 1 mm in a shrunk condition was put into each of aqueous glucose solutions prepared at the concentrations of 0 g/L, 0.5 g/L, 1 g/L, 3 g/L, 5 g/L and 10 g/L, then the change in diameter of the gel sample 3 was measured at each predetermined temperature in a range of 10 to 40°C (degrees of Celsius). The results of measurements were shown in Fig. 4(C).

As shown in Fig. 4(A) to (C), it was observed that the temperature-dependent changes in diameter of the gel samples produced from the phenylboronic acid monomer of the invention is controllable by varying the molar ratio of N-isopropylacrylamide (NIPAAm), or by adding N-(hydroxymethyl)acrylamide (HMAAm).

### (7) Gel sample containing N-isopropylacrilamide (NIPMAAm)

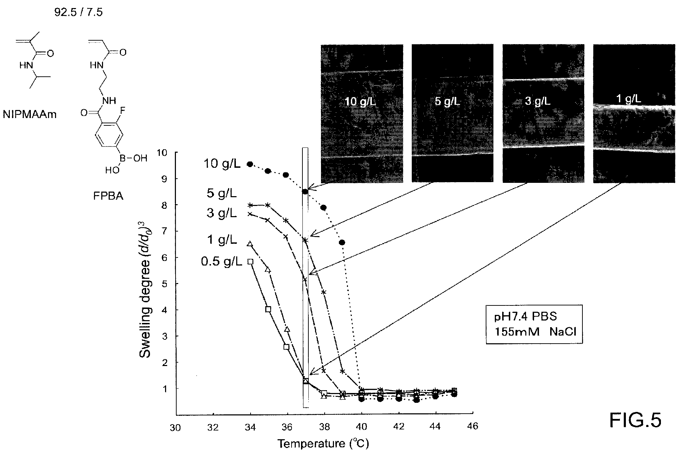

As for another case, as shown in Fig. 5, N-isopropylacrylamide (NIPAAm), and the sample 1 as the phenylboronic acid monomer of the example of the invention (FPBA) were mixed in a molar ratio of 92.5/7.5, then the gel sample (hereinafter referred to as gel sample 4) was produced. The gel sample 4 in a cylindrical shape having a diameter of 1 mm in a shrunk condition was put into each of aqueous glucose solutions prepared at the concentrations of 0.5 g/L, 1 g/L, 3 g/L, 5 g/L and 10 g/L respectively, then the change in the swelling degrees (d/d₀)³ of the gel sample 4 was measured at each predetermined temperature in a range of 34 to 45°C (degrees of Celsius). As a result, there could be obtained the results shown in Fig. 5. Further, the gel sample 4 was placed into each of the aqueous glucose solutions, and the photographs of each gel sample 4 were taken when at the temperature of 37°C (degrees of Celsius). The photographs show that the swelling was increased according to the glucose concentrations, as shown in Fig. 5.

Note that the degree of swelling referred to herein was represented by the values of cube of d/d₀ ratio at each temperature, wherein, do is the diameter of the gel sample 4 at various temperatures in saline of glucose concentration 0 g/L, and d is the diameter of gel sample 4 at various temperatures in the aqueous glucose solutions of the predetermined concentrations. A value of more than 1 regarding the swelling degree means that gel sample 4 has been caused to swell, and a value of less than 1 regarding swelling degree means that gel sample 4 has been caused to shrink. As shown in Fig. 5, it was observed that the gel sample 4 was caused to swell more remarkably as the concentration of the glucose increases at close to the normal physiological temperature at 35 to 37°C (degrees of Celsius). Consequently, it is understood that the phenylboronic acid monomer of the invention can be used as one of the raw substances for production of gel materials whose outer shape varies according to the changes in glucose concentrate ions.

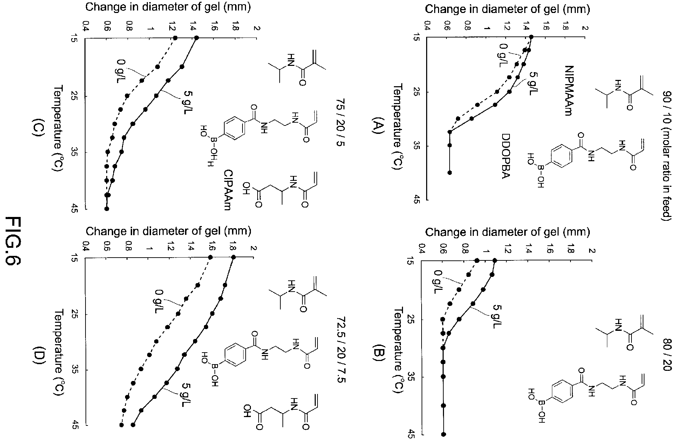

Subsequently, as another example shown in Fig. 6(A), N-isopropylmethacrylamide (NIPMMm) and the comparative sample 2 were copolymerized in a molar ratio of 90/10, then the gel sample (hereinafter referred to as comparative gel sample 3) was produced. The comparative gel sample 3 in a cylindrical shape having a diameter of 1 mm in a shrunk condition was put into each of the aqueous glucose solutions prepared at the concentrations of 0 g/L and 5 g/L, then the change in diameter of the comparative gel sample 3 was measured at each predetermined temperature in a range of 15 to 40°C (degrees of Celsius). As a result, there could be obtained the results shown in Fig. 6(A).

Furthermore, as shown in Fig. 6(B), N-isopropylmethacrylamide (NIPMAAm) and the comparative sample 2 were copolymerized in a molar ratio of 80/20, and thus a gel sample (hereinafter referred to as comparative sample 4) was produced. The comparative gel sample 4 in a cylindrical shape having a diameter of 1 mm in a shrunk condition was put into each of the aqueous glucose solutions prepared at the concentrations of 0 g/L and 5 g/L, then the change in diameter of the comparative gel sample 4 was measured at each predetermined temperature in a range of 15 to 45°C (degrees of Celsius). As a result, there could be obtained the results shown in Fig. 6(B).

Moreover, as shown in Fig. 6(C), N-isopropylmethacrylamide (NIPMAAm), the comparative sample 2 and carboxyisopropylacrylamide (CIPAAm) were copolymerized in a molar ratio of 75/20/5, then the gel sate sample (hereinafter referred to as comparative gel sample 5) was produced. The comparative gel sample 5 in a cylindrical shape having a diameter of 1 mm in a shrunk condition was put into each of aqueous glucose solutions prepared at the concentrations of 0 g/L and 5 g/L, then the change in diameter of the comparative gel sample 5 was measured at each predetermined temperature in a range of 15 to 45°C (degrees of Celsius). As a result, there could be obtained the results shown in Fig. 6(C).

Additionally, as shown in Fig. 6(D), N-isopropylmethacrylamide (NIPMAAm), the comparative sample 2 and carboxyisopropylacrylamide (CIPAAm) were copolymerized in a molar ratio of 72.5/20/7.5, and thus a gel sample (hereinafter referred to as a comparative gel sample 6) was produced. The comparative gel sample 6 in a cylindrical shape having a diameter of 1 mm in a shrunken condition was put into each of glucose aqueous solutions prepared at the concentrations of 0 g/L and 5 g/L, then the change in diameter of the comparative gel sample 6 was measured at each predetermined temperature in a range of 15 to 45°C (degrees of Celsius). As a result, there could be obtained the results shown in Fig. 6(D).

As shown in Fig. 5 and Figs. 6(A) to (D), it was observed that the changes in diameter of the gel sample 4 (Fig. 5) produced from the phenylboronic acid monomer of the invention, which was caused by varying the glucose concentration, was markedly larger than those of the comparative gel examples 3 to 6 shown in Figs. 6(A) to (D), in the neighborhood of the physiological temperature (35 to 37°C (degrees of Celsius)). Accordingly, it was observed that the phenylboronic acid monomer of the invention has the excellent capability of recognition of a saccharide, and works with sufficient effects as a saccharide-responsive gel.

While, it should be understood that the invention is not limited to any embodiments described above, but instead encompasses numerous alternatives and modifications within the scope of the invention. For examples, in the embodiments mentioned above, if N-isopropylmethacrylamide (NIPMAAm) and the sample 1 (FPBA) of the phenylboronic acid monomer of the present invention are mixed in a molar ratio ranging from 90/10 to 70/30 or in a variety of other ratios, as an alternative mixing ratio of N-isopropylmethacrylamide (NIPMAAm) and the sample 1 (FPBA) of the phenylboronic acid monomer of the present invention, yet the remarkable swelling effects according to glucose concentration can be induced at close to the normal physiological temperature of 35 to 37°C (degrees of Celsius), and thus, the present invention works sufficiently well as a saccharide responsive gel capitalizing on the saccharide-dependent change in the Lower Critical Solution Temperature (LCST).

Whilst glucose is applied as a saccharide in the foregoing embodiments of the invention, the invention is not limited thereto. Other saccharides comprising 1,2-diol or 1,3-diol such as galactose, mannose, fructose and the like, or macromolecules having hydroxyl group such as polyvinyl alcohol are also applicable.

## Claims

1. A phenylboronic acid monomer represented by the following formula 20:

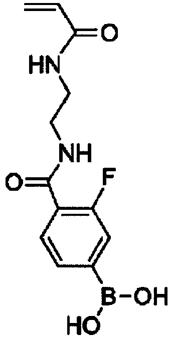

2. A phenylboronic acid polymer, wherein at least one compound selected from a group consisting of N-isopropylacrylamide, N-(hydroxymethyl)acrylamide and N-isopropylmethacrylamide is polymerized with the phenylboronic acid monomer according to claim 1.

3. A phenylboronic acid polymer obtained by polymerization of the phenylboronic acid monomer according to claim 1 with N-isopropylmethacrylamide in arbitrary proportion.

## Patentansprüche

1. Ein Phenylboronsäuremonomer dargestellt durch die nachfolgende Formel 20:

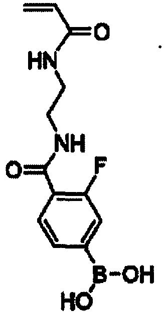

2. Ein Phenylboronsäurepolymer, wobei zumindest eine Verbindung ausgewählt aus der Gruppe bestehend aus N-Isopropylacrylamid, N-(Hydroxymethyl)acralamid und N-Isopropylmethacrylamid mit dem Phenylboronsäuremonomer nach Anspruch 1 polymerisiert ist.

3. Ein Phenylboronsäurepolymer hergestellt durch Polymerisation des Phenylboronsäuremonomers nach Anspruch 1 mit N-Isopropylmethacrylamid in willkürlichem Verhältnis.

## Revendications

1. Acide phénylboronique monomère représenté par la formule 20 ci-après :

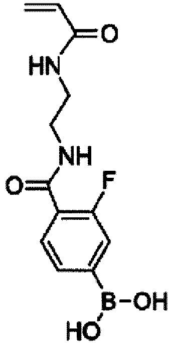

2. Polymère de l'acide phénylboronique, dans lequel au moins un composé choisi dans un groupe consistant en le N-isopropylacrylamide, le N-(hydroxyméthyl)acrylamide et le N-isopropylméthacrylamide est polymérisé avec l'acide phénylboronique monomère selon la revendication 1.

3. Polymère de l'acide phénylboronique obtenu par polymérisation de l'acide phénylboronique monomère selon la revendication 1 avec du N-isopropylméthacrylamide selon une proportion arbitraire.
